# EUROPÄISCHE PATENTANMELDUNG

(11) **EP 0 654 938 A2**
(43) Veröffentlichungstag der Anmeldung: **24.05.1995**
(21) Anmeldenummer: 94114834.8
(22) Anmeldetag: 20.09.1994
(51) Int. Cl.: H04N 1/407, H04N 1/40

(54) **Verfahren und Vorrichtung zur Erhöhung der Graustufenauflösung**

(30) Priorität: 21.09.1993 DE 4331965
(71) Anmelder: MDC Medical Diagnostic Computing GmbH, D-24106 Kiel (DE)
(72) Erfinder: Kortmann, Thomas, D-24146 Kiel (DE)
(74) Vertreter: Heldt, Gert, Dr. Dipl.-Ing.

(57) **Zusammenfassung**

Das Verfahren dient zur Erhöhung der Graustufenauflösung bei der Wiedergabe einer mit einem CCD-Sensor abgetasteteten Bildvorlage oder dergleichen, bei welchen jeweils von einzelnen Elementen der Bildvorlage in entsprechende einzelne Elemente des CCD-Sensors einfallendes Licht in elektrischen Ausgangsssignale umgewandelt wird, die der Bildwiedergabe zugrundegelegt werden. Der Wiedergabe hellerer Partien der Bildvorlage werden Ausgangssignale zugrundegelegt, die durch Abtasten der Bildvorlage mit Licht, das in mindestens einem Teil der entsprechenden Sensorelemente eine im Verhältnis geringere Ladungsintegration bewirkt, erzeugt werden. Entsprechend werden dunklere Partien der Bildvorlage mit Licht abgetastet, das in mindestens einem Teil der Sensorelemente eine im Verhältnis höhere Ladungsintegration bewirkt. Die der Wiedergabe der dunkleren Partien der Bildvorlage zugrundegelegten Ausgangssignale werden einer Pegelkorrektur unterworfen. Die Bidlvorlage wird mindestens zweimal abgetastet, wobei das von den Elementen der Bildvorlage einfallende Licht in den entsprechenden Elementen des CCD-Sensors bei jedem der Abtastvorgänge eine unterschiedliche Ladungsintegration bewirkt. Die Abtastung geschieht mit unterschiedlicher Lichtintensität, wobei der Wiedergabe hellerer Partien der Bildvorlage Ausgangssignale zugrundegelegt werden, die beim Abtasten mit einer im Verhältnis geringeren Lichtintensität in entsprechenden Elementen des CCD-Sensors erzeugt werden. Der Wiedergabe dunklerer Partien der Bildvorlage werden Ausgangssignale zugrundegelegt, die beim Abtasten mit einer im Verhältnis höheren Lichtintensität in entsprechenden Elementen des CCD-Sensors erzeugt werden. Die zugehörige Vorrichtung besitzt eine Steuerung, die der Wiedergabe hellerer Partien der Bildvorlage Ausgangssignale zugrundelegt, die beim Abtasten mit Licht, das in mindestens einem Teil der Sensorelemente eine im Verhältnis geringere Ladungsintegration bewirkt, erzeugt werden. Entsprechend wird die Bildvorlage mit Licht abgetastet, das in mindestens einem Teil der Sensorelemente eine im Verhältnis höhere Ladungsintegration bewirkt.

## Beschreibung

Die Erfindung betrifft ein Verfahren zur Erhöhung der Graustufenauflösung bei der Wiedergabe einer mit einem CCD-Sensor abgetasteten Bildvorlage oder dergleichen, bei welchem jeweils von einzelnen Elementen der Bildvorlage in entsprechende einzelne Elemente des CCD-Sensors einfallendes Licht in elektrische Ausgangssignale umgewandelt wird, die der Bildwiedergabe zugrundegelegt werden. Die Erfindung betrifft weiter eine Vorrichtung zur Erhöhung der Graustufenauflösung bei der Wiedergabe einer Bildvorlage oder dergleichen, mit mindestens einer die Bildvorlage beleuchtenden Lichtquelle und mindestens einem CCD-Sensor mit einer Mehrzahl einzelner Elemente, in denen jeweils von einzelnen Elementen der Bildvorlage einfallendes Licht in elektrische Ausgangssignale umgewandelt wird, insbesondere zur Durchführung des erfindungsgemäßen Verfahrens.

Derartige Verfahren und Vorrichtungen können überall dort eingesetzt werden, wo lichtempfindliche CCD-Sensoren zur Bildaufnahme und -wiedergabe verwendet werden. Beispiele dafür sind der Einsatz von CCD-Zeilen zur Erzeugung eines Videobildes einer zweidimensionalen Bildvorlage oder der Einsatz eines CCD-Bildsensor in einer Fernsehkamera. In jedem der als Photodioden ausgebildeten Elemente des CCD-Sensors werden durch das einfallende Licht je nach dessen Intensität und Einfallszeitdauer eine unterschiedlich hohe Ladungsintegration bewirkt, wobei die in den Sensorelementen erzeugten Ladungen nach der Integrationszeit jeweils über den Sensorelementen benachbarte Transportregister verlagert und von dort als elektrische Ausgangssignale einer Ausleseschaltung zugeführt werden. Solange keine Übersteuerung der Sensorelemente erfolgt, sind die elektrischen Ausgangssignale proportional zur Intensität des einfallenden Lichts. Allerdings ist den Signalen unabhängig von der Ladungsintegration ein additives Rauschen überlagert. Dies macht sich insbesondere bei der Wiedergabe sehr dunkler Partien der Bildvorlage störend bemerkbar, in denen das überlagerte Rauschen in der gleichen Größenordnung wie das Ausgangssignal liegen kann, so daß die Graustufenauflösung in diesen Partien erheblich schlechter als in helleren Partien der Bildvorlage ist. Bei sorgfältiger Schaltungsauslegung läßt sich mit CCD-Sensoren zur Zeit im digitalisierten Ausgangssignal ein Störabstand von etwa 1000 zu 1 erreichen. Damit liegt die Grenze der Graustufenauflösung bei einem optischen Dichteumfang von 3.

Ausgehend hiervon liegt der Erfindung die Aufgabe zugrunde, ein Verfahren und eine Vorrichtung der eingangs genannten Art dahingehend zu verbessern, daß die Graustufenauflösung erhöht werden kann.

Im Hinblick auf das Verfahren wird diese Aufgabe erfindungsgemäß dadurch gelöst, daß der Wiedergabe hellerer Partien der Bildvorlage Ausgangssignale zugrundegelegt werden, die durch Abtasten dieser Bildpartien mit Licht erzeugt werden, das in mindestens einem Teil der entsprechenden Sensorelemente eine im Verhältnis geringere Ladungsintegration bewirkt, während der Wiedergabe dunklerer Partien der Bildvorlage Ausgangssignale zugrundgelegt werden, die durch Abtasten dieser Bildpartien mit Licht erzeugt werden, das in mindestens einem Teil der entsprechenden Sensorelemente eine in Verhältnis höhere Ladungsintegration bewirkt. Der Erfindung liegt dabei der Gedanke zugrunde, die Bildvorlage zeilenweise, zonenweise oder in ihrer Gesamtheit mehrmals, vorzugsweise zweimal abzutasten, wobei jeweils eine unterschiedlich starke Ladungsintegration in den einzelnen Elementen des CCD-Sensors bewirkt wird. Von den dabei entstehenden elektrischen Ausgangssignalen wird jeweils ein unterschiedlicher Teil zur Bildwiedergabe herangezogen, wobei der Wiedergabe hellerer Partien der Bildvorlage Ausgangssignale zugrundegelegt werden, die bei einem Abtastvorgang erzeugt wurden, bei welchem in den entsprechenden Elementen des CCD-Sensors eine geringere, vorzugsweise etwas unterhalb von deren Sättigungspegel liegende Ladungsintegration bewirkt wurde, während der Wiedergabe dunklerer Partien der Bildvorlage Ausgangssignale zugrundegelegt werden, die bei einem Abtastvorgang erzeugt wurden, bei dem in mindestens einem Teil der Sensorelemente eine im Verhältnis höhere Ladungsintegration bewirkt wurde, d. h. bei einem Abtastvorgang, bei dem die den helleren Partien der Bildvorlage entsprechenden Elemente des CCD-Sensors vorzugsweise um ein Mehrfaches übersteuert werden. In den dunkleren Partien der Bildvorlage wird bei dem zuletzt genannten Abtastvorgang ein so hoher Signalpegel erzeugt, daß der konstante, additive Rauschanteil vernachlässigbar ist. Von den bei diesem Abtastvorgang erzeugten Ausgangssignalen wird mindestens derjenige Teil verworfen, der in den übersteuerten Elementen des CCD-Sensors erzeugt wird, während der einer Auswertung zugeführte Rest dieser Ausgangssignale einer Pegelkorrektur unterworfen wird, bevor er der Wiedergabe der dunkleren Partien der Bilvorlage zugrunde gelegt wird.

Eine bevorzugte Ausgestaltung der Erfindung sieht vor, daß die Bildvorlage mindestens zweimal mit unterschiedlicher Lichtintensität abgetastet wird, wobei der Wiedergabe hellerer Partien der Bildvorlage Ausgangssignale zugrundegelegt werden, die beim Abtasten mit einer im Verhältnis geringeren Lichtintensität in entsprechenden Elementen des CCD-Sensors erzeugt werden, während der Wiedergabe dunklerer Partien der Bildvorlage Ausgangssignale zugrundegelegt werden, die beim Abtasten mit einer im Verhältnis höheren Lichtintensität in entsprechenden Elementen des CCD-Sensors erzeugt werden.

Dabei wird die Bildvorlage gemäß einer vorteilhaften Ausgestaltung der Erfindung bei einem der Abtastvorgänge mit Licht abgetastet, dessen Intensität so gewählt ist, daß die Intensität des von den hellsten Partien der Bildvorlage in entsprechende Elemente des CCD-Sensors einfallenden Lichts unterhalb eines Sättigungspegels der Sensorelemente bleibt. Die bei diesem Abtastvorgang erzeugten Ausgangssignale werden bei der Auswertung der Wiedergabe der helleren Bildpartien zugrundegelegt.

Eine weitere bevorzugte Ausgestaltung der Erfindung sieht vor, daß die Bildvorlage bei einem weiteren Abtastvorgang mit Licht abgetastet wird, dessen Intensität so gewählt ist, daß die Intensität des von helleren Partien der Bildvorlage in entsprechende Elemente des CCD-Sensors einfallenden Lichts so groß ist, daß diese Elemente übersteuert und in die Sättigung gebracht werden.

Bevorzugt wird die Bildvorlage zweimal aufeinanderfolgend abgetastet, zunächst mit einer verhältnismäßig geringen Lichtintensität, welche in denjenigen Elementen, die den hellsten Partien der Bildvorlage entsprechen, eine Ladungsintegration unterhalb des Sättigungspegels dieser Elemente bewirkt, und dann mit einer verhältnismäßig hohen, vorzugsweise um ein L-faches größeren Lichtintensität abgetastet wird, wobei L vorzugsweise > 10 ist. Bei der Wiedergabe der Bildvorlage werden der Wiedergabe der helleren Partien die gespeicherten, beim ersten Abtastvorgang in entsprechenden Elementen des CCD-Sensors erzeugten Ausgangssignale zugrundegelegt, während der Wiedergabe der dunkleren Partien die beim zweiten Abtastvorgang erzeugten Ausgangssignale nach einer rechnerischen Pegelkorrektur um den Faktor L zugrundegelegt werden.

Die beiden aufeinanderfolgenden Abtastvorgänge können entweder zeilenweise oder zonenweise durchgeführt werden. Alternativ dazu kann die Bildvorlage in ihrer Gesamtheit zweimal aufeinanderfolgend abgetastet werden, wobei die Relativbewegung zwischen der Bildvorlage und dem CCD-Sensor zweckmäßig beim zweiten Abtastvorgang in umgekehrter Richtung erfolgt.

Um eine Überstrahlung (Blooming) von zu übersteuerten Sensorelementen benachbarten Sensorelementen durch Ladungsüberschwemmung zu verhindern, können entweder CCD-Sensoren mit Anti-blooming verwendet werde, bei denen bei einer Übersteuerung einzelner Sensorelemente keine Überschwemmung der benachbarten Elemente mit Ladungsträgern zu befürchten ist, so daß sich das erfindungsgemäße Verfahren einfacher realisieren läßt. In diesem Fall wird vorgeschlagen, einzelne Zonen oder Zeilen der Bildvorlage oder die Bildvorlage in ihrer Gesamtheit wechselweise einmal mit geringerer und einmal höherer Lichtintensität zu beleuchten, wobei diese wechselweise Beleuchtung in Synchronisation mit einer Relatvivverschiebung zwischen der Bildvorlage und dem CCD-Sensor erfolgt, d. h. es erfolgt eine vorschubsynchrone wechselweise Erhöhung und Absenkung der Lichtintensität.

Die Veränderung der Intensität des von einer Lichtquelle auf die Bildvorlage einfallenden Lichts kann zum einen durch Veränderung der Intensität des von der Lichtquelle, beispielsweise einer LED-Zeile abgestrahlten Lichts oder beispielsweise durch rotierende Blenden gesteuert werden, die die Lichtquelle jeweils unterschiedlich stark abblenden. Bei Verwendung von Lichtquellen mit konstanter Intensität kann die Steuerung dadurch erfolgen, daß die Ladungsintegration im CCD-Sensor bei den einzelnen Abtastvorgängen nach Ablauf unterschiedlicher Zeiträume, d. h. beim ersten Abtastvorgang nach einem verhältnismäßig kurzen Zeitintervall (entsprechend einer im Verhältnis geringen Ladungsintegration) und beim zweiten Abtastvorgang gegen Ende des vorgegebenen Zeittaktes für die Abtastung einer Zeile, einer Zone oder gesamten Bildvorlage. Auch in diesem Fall werden die beim zweiten Abtastvorgang erzeugten Ausgangssignale einer Pegelkorrektur um einen Faktor L unterworfen, der dem Verhältnis der unterschiedlich langen Zeitintervalle entspricht.

Da bei CCD-Sensoren ohne Anti-blooming bei einer Überstrahlung nicht nur die direkt vom Licht betroffenen Sensorelemente in die Sättigung gebracht werden, sondern je nach Intensität des Lichts eventuell sogar alle Elemente des Sensors, muß für eine individuell gesteuerte Begrenzung des auf die helleren Partien der Bildvorlage einfallenden Lichts gesorgt werden. Dazu werden in einem ersten Abtastvorgang (Prescan) die hellen Partien der Bildvorlage abgetastet und ihre Lage, d. h. ihre Koordinaten in einem Rechner gespeichert. Bei einem zweiten Abtastvorgang (Scan) werden nun die dunkleren Partien der Bildvorlage mit höherer Lichtintensität abgetastet, während die Lichtintensität im Bereich der helleren Partien der Bildvorlage soweit abgesenkt wird, daß keine Übersteuerung der entsprechenden Bildelemente eintritt. Zur bereichsweisen Steuerung der Lichtintensität in Abhängigkeit von der Helligkeit der Bildvorlage kann ein Leuchtdiodenarray mit Einzelansteuerung oder ein LCD-Modul verwendet werden, das zwischen der Lichtquelle und der Bildvorlage angeordnet ist, und das von der Lichtquelle einfallende Licht konstanter Intensität bereichsweise abblendet. Die Ansteuerung des Leuchtdiodenarrays bzw. des LCD-Moduls erfolgt dabei unter Zugrundelegung der beim Prescan im Rechner gespeicherten Koordinaten der helleren Partien der Bildvorlage. Da die Ortsauflösung eines Leuchtdiodenarrays bzw. eines LCD-Moduls geringer ist, als diejenige des CCD-Sensors, werden gemäß einer weiteren vorteilhaften Ausgestaltung der Erfindung die Werte aus dem Prescan und dem Scan entsprechend interpoliert.

Um ein zweimaliges Abtasten der Bildvorlage zu umgehen, da es insbesondere dann eine doppelt so große Abtastzeit bedeutet, wenn in der Abtastung die zeitliche Begrenzung liegt, sieht eine weitere bevorzugte Ausgestaltung der Erfindung vor, daß die elektrischen Ausgangssignale von mindestens jeweils zwei, vorzugsweise jeweils drei voneinander unabhängigen, jeweils mit unterschiedlichen Farbfiltern abgedeckten Elementen des CCD-Sensors gemeinsam ausgewertet werden, und daß die spektrale Verteilung des einfallenden Lichts so gewählt wird, daß in jeweils mindestens einem der gemeinsam ausgewerteten Elemente eine im Verhältnis geringere Ladungsintegration bewirkt wird, während in jeweils mindestens einem anderen der gemeinsam ausgewerteten Elemente eine im Verhältnis höhere Ladungsintegration bewirkt wird. Zweckmäßig werden dabei im CCD-Sensor Piksel aus drei einander benachbarten unabhängigen Sensorelementen gebildet, die jeweils durch einen Rotfilter, einen Gelbfilter bzw. einen Blaufilter abgedeckt sind, bei einer CCD-Zeile z. B. in der Reihenfolge -R-G-B-R usw.

Die spektrale Verteilung des einfallenden Lichts wird gemäß einer weiteren vorteilhaften Ausgestaltung der Erfindung so gewählt, daß beim Abtasten der helleren Partien der Bildvorlage mindestens eines der drei Elemente des Piksels übersteuert wird, während mindestens ein anderes Element geringfügig unterhalb seines Sättigungspegels bleibt. Der Wiedergabe der im Verhältnis helleren Partien der Bildvorlage werden jeweils Ausgangssignale des oder der Elemente des Piksels zugrundegelegt, die beim Abtasten dieser Partien unterhalb ihres Sättigungspegels bleiben, während der Wiedergabe der im Verhältnis dunkleren Partien der Bildvorlage jeweils Ausgangssignale zugrundegelegt werden, die in dem oder den Elementen des Pixels erzeugt werden, welche beim Abtasten der helleren Partien übersteuert werden, wobei die zuletzt genannten Ausgangssignale vor einer Bildwiedergabe einer Pegelkorrektur unterworfen werden.

Prinzipiell ist es möglich, bei Verwendung von drei Farbfiltern das Verfahren auf insgesamt drei Pegelstufen auszudehnen, d. h. daß die spektrale Verteilung des einfallenden Lichts so gewählt wird, daß beim Abtasten einer gleichmäßig hellen oder gleichmäßig dunklen Partie der Bildvorlage jeweils drei unterschiedlich hohe Ausgangssignale in den einzelnen Elementen des Pixel erzeugt werden.

Weiter besteht allerdings auch die Möglichkeit, die Abtastzeit beim zweimaligen Abtasten zu verringern, indem die Integrationszeit jeweils zweier benachbarter Elemente des CCD-Sensors so gesteuert wird, daß ein erster Teil dieser Elemente bei Vollaussteuerung, d. h. beim Abtasten der hellsten Partien der Bildvorlage einen Sättigungspegel der Elemente erreicht oder geringfügig unterschreitet, während ein zweiter Teil dieser Elemente optisch übersteuert wird, und daß der Bildwiedergabe ein Ausgangssignal zugrundegelegt wird, das sich aus den Ausgangssignalen der zwei benachbarten Elemente zusammensetzt. Dabei kann jeweils die Integrationszeit eines geradzahligen und eines ungeradzahligen Elementes des CCD-Sensors, deren Ladungen über jeweils unterschiedliche Transportregister abgeführt werden, unterschiedlich lang sein.

Bei der Bildwiedergabe werden dann vorteilhafterweise jeweils die Ausgangssignale der zwei benachbarten geradzahligen und ungeradzahligen Elemente unter entsprechender Berücksichtigung der unterschiedlichen Integrationszeit zusammengefaßt.

Im Hinblick auf die Vorrichtung wird die Aufgabe erfindungsgemäß dadurch gelöst, daß die Vorrichtung eine Steuerung aufweist, die der Wiedergabe hellerer Partien der Bildvorlage Ausgangssignale zugrundelegt, die beim Abtasten der Bildvorlage mit Licht erzeugt werden, das in mindestens einem Teil der Sensorelemente eine im Verhältnis geringere Ladungsintegration bewirkt, und die der Wiedergabe dunklerer Partien der Bildvorlage Ausgangssignale zugrundelegt, die beim Abtasten der Bildvorlage mit Licht erzeugt werden, das in mindestens einem Teil der Sensorelemente eine im Verhältnis höhere Ladungsintegration bewirkt.

Bevorzugt tastet die Steuerung die Bildvorlage mindestens zweimal mit Licht unterschiedlicher Intensität ab und legt der Wiedergabe hellerer Partien der Bildvorlage Ausgangssignale zugrunde, die beim Abtasten mit einer im Verhältnis geringeren Lichtintensität in den entsprechenden Elementen des CCD-Sensors erzeugt werden, während sie der Wiedergabe dunklerer Partien der Bildvorlage Ausgangssignale zugrundelegt, die beim Abtasten mit einer im Verhältnis höheren Lichtintensität in den entsprechenden Elementen des CCD-Sensors erzeugt werden. Eine weitere bevorzugte Ausgestaltung der Erfindung sieht vor, daß das Verhältnis zwischen einem Sättigungspegel der Elemente des CCD-Sensors und einer Intensität des bei einem ersten Abtastvorgangs einfallenden Lichts derart ist, daß der Sättigungspegel beim Abtasten hellerer Partien der Bildvorlage nicht erreicht, vorzugsweise geringfügig unterschritten wird. Demgegenüber ist das Verhältnis zwischen einem Sättigungspegel der Elemente des CCD-Sensors und einer Intensität des einfallenden Lichts bei einem zweiten Abtastvorgang derart, daß der Sättigungspegel beim Abtasten hellerer Partien der Bildvorlage überschritten wird. Bevorzugt unterscheiden sich die Intensitäten des einfallenden Lichts beim ersten und zweiten Abtastvorgang um einen Faktor L, der größer als 10, vorzugsweise größer als 20 ist.

Um ein zweimaliges Abtasten der Bildvorlage zu vermeiden, wird gemäß einer weiteren bevorzugten Ausgestaltung der Erfindung vorgeschlagen, daß jeweils mehrere, vorzugsweise jeweils drei Elemente des CCD-Sensors zu einem Pixel zusammengefaßt und mit unterschiedlichen Farbfiltern abgedeckt sind, und daß die spektrale Verteilung des einfallenden Lichts derart gewählt ist, daß in jeweils einem der Elemente des Pixels eine im Verhältnis geringere Ladungsintegration bewirkt wird, während in jeweils mindestens einem anderen der Elemente des Pixel eine im Verhältnis höhere Ladungsintegration bewirkt wird.

Im Folgenden wird die Erfindung anhand eines in der Zeichnung in schematischer Weise dargestellten Ausführungsbeispiels näher erläutert. Es zeigen:
- Fig. 1:: eine schematische Ansicht einer Vorrichtung zur Digitalisierung von Röntgenbildern mit einem CCD-Sensor;

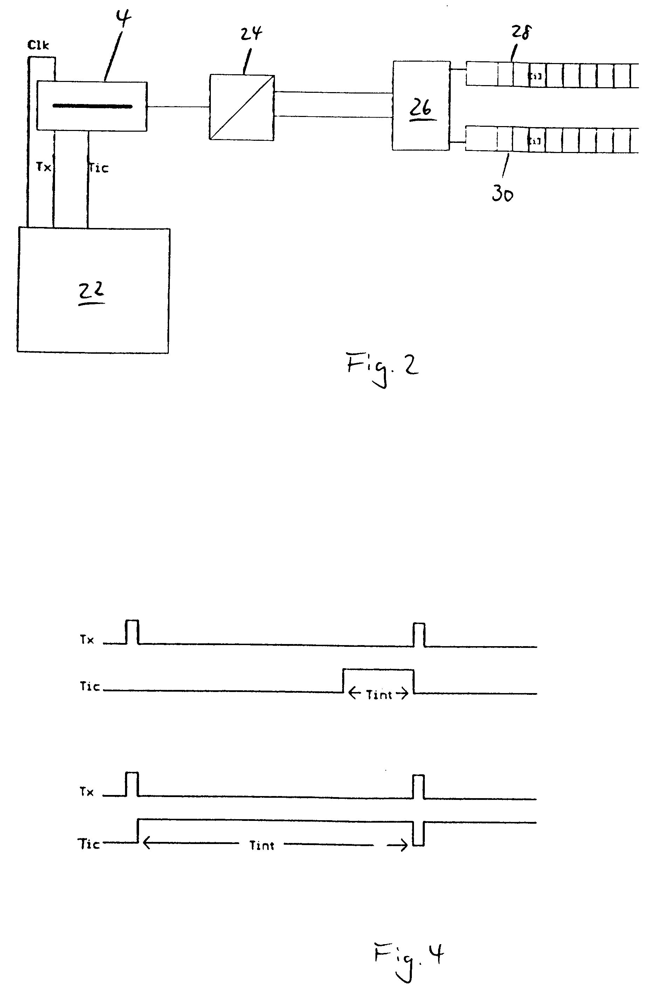

- Fig. 2:: ein Blockschaltbild des CCD-Zeilensensors der Vorrichtung aus Fig. 1;
- Fig. 3:: eine schematische Ansicht einer Vorrichtung mit zwei Kameraköpfen;
- Fig. 4:: eine Darstellung unterschiedlicher Lichtintegrationszeiten zwischen jeweils zwei Zeilenstartimpulsen;
- Fig. 5: eine schematische Darstellung der Ausgangssignale mehrerer Pixel einer CCD-Zeile bei Abtastung eines Graukeils mit zwei unterschiedlichen Lichtintensitäten;
- Fig. 6:: eine schematische Darstellung der spektralen Verteilung einer zum Abtasten einer Vorlage verwendeten Lichtquelle, sowie die Durchlässigkeitskurven von Farbfiltern, die jeweils eines von drei gemeinsam ausgewerteten Pixeln einer CCD-Zeile abdecken.

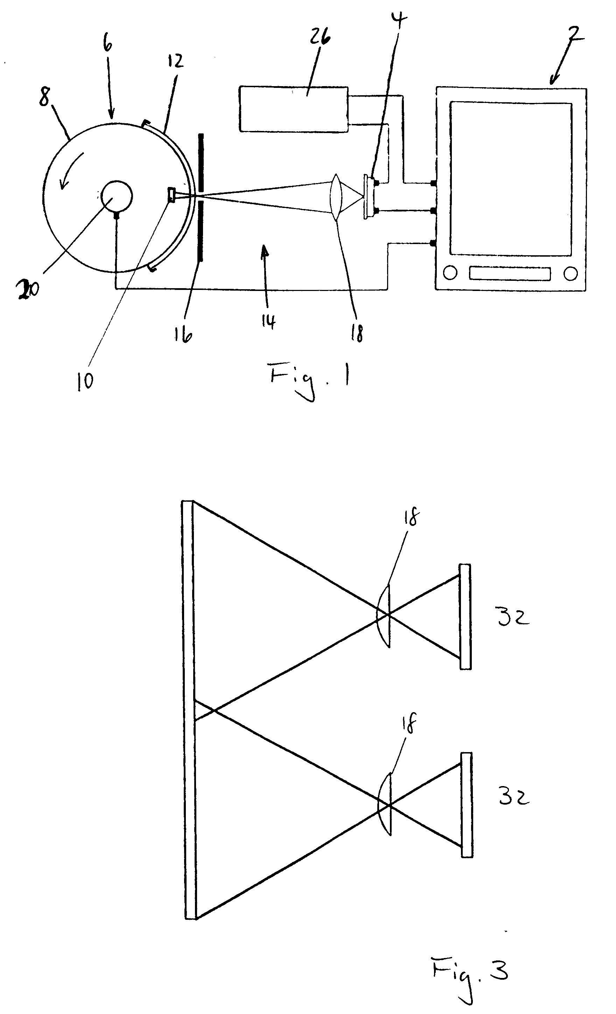

Die in Figur 1 dargestellte Vorrichtung zur Durchführung des erfindungsgemäßen Verfahrens wird vorzugsweise bei der Digitalisierung von Röntgenbildern oder Röntgenfilmen mit hoher Dynamik eingesetzt.

Die Vorrichtung besteht im wesentlichen aus einem mit einem Monitor 2 zur Bildwiedergabe gekoppelten CCD-Zeilensensor 4, einer rotierenden Trommel 6 mit transparentem Trommelmantel 8, einer im Inneren der Trommel 6 angeordneten Lichtquelle 10, einer Einrichtung zum Aufspannen einer Röntgenbildvorlage 12 auf dem Trommelmantel 8, sowie einer Abbildeoptik 14, die einen Teil des von der Lichtquelle 10 abgestrahlten, durch die Röntgenbildvorlage 12 hindurchtretenden Lichts auf den CCD-Zeilensensor 4 fokussiert. Die Abbildeoptik 14 weist dabei eine unmittelbar hinter der Röntgenbildvorlage 12 angeordnete Schlitzblende 16 sowie ein zwischen der Schlitzblende 16 und dem CCD-Zeilensensor angeordnetes Objektiv 18 auf.

Die Drehgeschwindigkeit des Trommelantriebs 20 kann mit der vertikalen Abtastgeschwindigkeit des Monitors 2 so synchronisiert werden, daß auf dem Monitor 2 untereinander horizontale Bildzeilen wiedergegeben werden, die jeweils den gerade im Lichtweg zwischen der Lichtquelle 10 und dem CCD-Zeilensensor 4 angeordneten schmalen Streifen der Bildvorlage 12 entsprechen. Dazu ist ein mit dem Antrieb 20 der Trommel 6 gekoppelter Taktgenerator 22 vorgesehen, der den CCD-Zeilensensor 4 jeweils mit Zeilenstartimpulsen Tx versorgt.

Die von den einzelnen Elementen, d.h. Photodioden des CCD-Zeilensensors 4 erzeugten elektrischen Ausgangssignale werden über einen Analog/Digital-Wandler 24 einer Steuerung 26 zum Verarbeiten der digitalisierten Ausgangssignale zugeführt. Die Steuerung 26 weist zwei Zeilenspeicher 28,30 auf, in denen die Ausgangssignale von den einzelnen Elementen des CCD-Zeilensensors 4 zwischengespeichert werden können, und ist so ausgelegt, daß jeweils ein unterschiedlicher Teil der in jedem der beiden Zeilenspeicher 28,30 gespeicherten Signale dem Monitor 2 zugeführt bzw. verworfen d.h. ohne Weiterverwendung gelöscht werden kann.

Ein nicht dargestellter Bildspeicher dient zum Speichern der auf dem Monitor 2 dargestellen Abbildungen der Bildvorlage 12.

Zur Erhöhung der Graustufenauflösung bei der Wiedergabe einer mit dem CCD-Zeilensensor abgetasteten Bildvorlage 12 kann die Bildvorlage 12 zeilenweise zweimal mit Licht unterschiedlicher Intensität abgetastet werden, wobei die Abtastung jeder einzelnen Zeile zunächst mit verhältnismäßig geringer Lichtintensität erfolgt. Der Lichtpegel bei diesem ersten Abtastvorgang ist so gewählt, daß die Ladungsintegration in sämtlichen Elementen des CCD-Zeilensensors 4 unterhalb ihres Sättigungspegels bleibt, d.h. auch in denjenigen Elementen, in die das Licht der Lichtquelle 10 ungeschwächt von der Bildvorlage 12 einfällt. Die bei diesem Abtastvorgang in den einzelnen Elementen des CCD-Zeilensensors 4 erzeugten Ausgangsignale werden nach ihrer Digitalisierung im ersten Zeilenspeicher 28 der Steuerung 26 zwischengespeichert. Anschließend erfolgt eine Abtastung derselben Zeile der Bildvorlage mit einer um einen Faktor L stärkeren Lichtintensität, bei der bei einer Bildvorlagezeile mit helleren und dunkleren Partien der Teil der Elemente des CCD-Zeilensensors 4 in die Sättigung gelangt, in den das Licht von den helleren Partien einfällt. Bei diesem Abtastvorgang bleibt die Ladungsintegration somit nur in denjenigen Elementen des CCD-Zeilensensors unterhalb des Sättigungspegels, in die Licht einfällt, das durch dunklere Partien der Bildvorlage hindurchgetreten ist und dessen Intensität dadurch stark abgeschwächt worden ist. Die Ausgangssignale des zweiten Abtastvorgangs werden im zweiten Zeilenspeicher 30 ebenfalls zwischengespeichert.

Von den im Zweiten Zeilenspeicher 30 gespeicherten Signalen wird nun derjenige Teil verworfen, der einen oberen Schwellenwert erreicht, der vorzugsweise dem Sättigungspegel entspricht, jedoch auch unter diesem liegen kann. Die restlichen, unterhalb des Schwellenwertes liegenden Signale werden ausgelesen und zum Ausgleich der höheren Lichtintensität rechnerisch einer Pegelkorrektur um den Faktor L unterworfen. Sie bilden anschließend zusammen mit denjenigen Signalen des ersten Zeilenspeichers 28, deren Adressen den Adressen der verworfenen Signale des zweiten Zeilenspeichers 30 entsprechen, die Grundlage für die Wiedergabe der Bildzeile auf dem Monitor 2.

Somit liefert der erste Abtastvorgang die Signale, die den helleren Partien der Bildvorlage zugrundegelegt werden, während der zweite Abtastvorgang die Signale für die dunkleren Partien liefert. Da beim zweiten Abtastvorgang der signalunabhängige Pegel des Rauschens durch die rechnerische Pegelkorrektur ebenfalls um den Faktor L reduziert wird, wird der Störabstand insgesamt um den Faktor L erhöht.

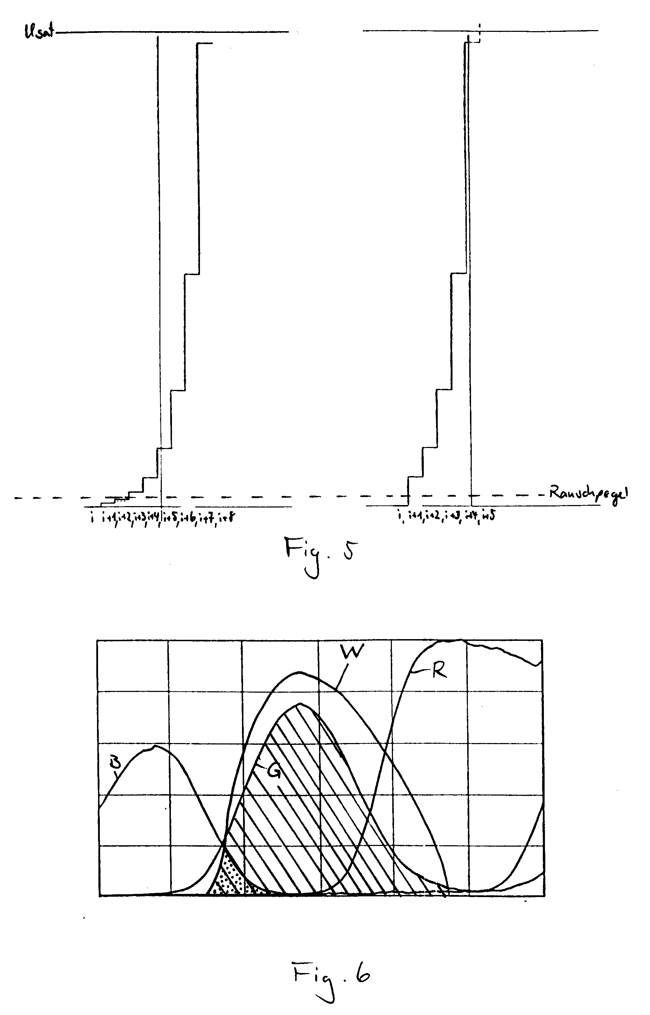

Wie in Fig. 5 dargestellt, liegen bei Verwendung eines Graukeils als Bildvorlage 12 die Elemente i, i+1, ... 1+8 eines CCD-Zeilensensors 4 beim ersten Abtastvorgang unterhalb des Sättigungspegels Usat, während beim zweiten Abtastvorgang mit 8-facher Übersteuerung nur die Elemente i, i+1, .... i+6 unterhalb von Usat liegen, die Elemente i+7 und i+8 hingegen in die Sättigung gelangen. Bei Verwendung von Usat als oberem Schwellenwert erfolgt daher die Bildwiedergabe auf dem Monitor 2 auf der Grundlage der Ausgangssignale von den Elementen i+7 und i+8 des ersten Zeilenspeichers 28 und der einer Pegelkorrektur um den Faktor 8 unterzogenen Ausgangssignale der Elemente i, i+1 ... i+6 des zweiten Zeilenspeichers 30.

Je nach gewünschter Erhöhung der Graustufenauflösung bzw. des Störabstands kann der Faktor L der Intensitätserhöhung größer als 10, vorzugsweise größer als 20 sein. Da bei CCD-Zeilensensoren ohne Antiblooming bei einem großen Faktor L die hohe Lichtintensität des zweiten Abtastvorgangs durch Überstrahlung selbst diejenigen Elementen des CCD-Zeilensensors 4 in die Sättigung bringen kann, die jeweils den dunkleren Partien der Bildvorlage zugeordnet sind, werden vorzugsweise CCD-Zeilensensoren mit Antiblooming verwendet, bei denen bei einer Übersteuerung einzelner Sensorelemente keine Überschwemmung der benachbarten Elemente mit Ladungsträgern zu befürchten ist.

Zur Veränderung der Lichtintensität bei den beiden Abtastvorgängen kann eine Lichtquelle verwendet werden, deren Intensität vorschubsynchron erhöht bzw. abgesenkt werden kann, beispielsweise eine im Inneren der Trommel angeordnete LED-Zeile. Alternativ dazu kann man rotierende oder verschiebbare Blenden vorsehen, die jeweils zwischen zwei Zeilenstartimpulsen für einen festgelegten Zeitraum während des ersten Abtastvorgangs den Strahlengang zwischen der Lichtquelle und dem CCD-Zeilensensor unterbrechen. Die gleiche Wirkung läßt sich auch dadurch erzielen, daß die Integrationszeit im Sensor beispielsweise durch ein unterschiedlich langes Integrationszeit-Taktsignal Tic des Taktgenerators bei beiden Abtastvorgängen jeweils nach unterschiedlichen Zeitspannen, d.h. nach einer kurzen Zeitspanne beim ersten Abtastvorgang bzw. gegen Ende einer Zeilenabtastung beim zweiten Abtastvorgang abgeschaltet wird (Fig. 3).

Falls an Stelle einer zeilenweisen Abtastung mit unterschiedlicher Ladungsintegration in den Elementen des CCD-Zeilensensors eine aufeinanderfolgende Abtastung größerer Bereiche oder der gesamten Bildvorlage vorgenommen werden soll, können entsprechend die Zeilenspeicher 28,30 durch Zeilen- und Spaltenspeicher ersetzt werden, wobei das Verfahren ansonsten ähnlich abläuft. An Stelle eines langsameren Vorschubs der Bildvorlage 12, der ein zweimaliges Abtasten jeder Zeile erlaubt, kann hier die Bildvorlage 12 in einer ersten Vorschubrichtung mit geringer Ladungsintegration in den Elementen des CCD-Sensors und anschließend in einer entgegengesetzten Vorschubrichtung mit hoher Ladungsintegration in den Elementen abgetastet werden, wobei dann allerdings auch der Zugriff auf die Spaltenadressen der Zwischenspeicher in entgegengesetzter Reihenfolge erfolgen muß.

Um ein zweimaliges Abtasten und eine damit u.U. verbundene größere Abtastzeit zu vermeiden, kann der CCD-Zeilensensor 4 so angesteuert werden, daß während eines einzigen Abtastvorgangs jeweils gleichzeitig in unterschiedlichen Teilen seiner Elemente eine im Verhältnis höhere bzw. niedrigere Ladungsintegration bewirkt wird. Dazu wird ein CCD-Zeilensensor 4 verwendet, der auf beiden Seiten der Photodiodenzeile je ein Transportregister aufweist, in dem die analogen elektrischen Ausgangssignale der geradzahligen bzw. der ungeradzahligen Pixel über je einen am Enden des Transportregisters angeordneten Ausleseverstärker ausgelesen werden. Die zwischen den jeweils geradzahligen bzw. ungeradzahligen Elementen (Photodioden) des CCD-Zeilensensors 4 und den Transportregistern angeordneten sog. Photogates werden jeweils so angesteuert, daß sich für die beiden von den jeweiligen Photogates, einem Transportregister und einem Auslöseverstärker gebildeten Kanäle unterschiedliche Ladungsintegrationszeiten ergeben, so daß deren Signalpegel bei gleicher Lichtintensität unterschiedlich hoch sind. Die von den Ausleseverstärkern beider Kanäle ausgegebenen Signale können, wie oben für die zwei getrennte Abtastvorgänge beschrieben, in den Zeilenspeichern 28 bzw. 30 gespeichert werden, wobei wiederum entsprechend dem bereits beschriebenen Vorgang ein Teil der Signale aus dem übersteuerten Kanal verworfen und der verbleibende Teil nach einer rechnerischen Pegelkorrektur zusammen mit denjenigen Signalen des anderen Kanals, deren Adressen den Adressen der verworfenen Signale entsprechen, der Bildwiedergabe zugrundegelegt wird.

Zum Ausgleich der dadurch verursachten Halbierung der räumlichen Auflösung können zwei Kameraköpfe 32 so nebeneinader angeordnet werden, daß die zugehörigen Abtastspalte aneinandergrenzen bzw. einander überlappen, um einen interpolierenden Übergang zu erhalten (Fig. 3).

An Stelle zweier Kameraköpfe 32 kann auch ein Lichtteilerprisma oder ein Lichtteilerspiegel verwendet werden, das/der so im Strahlengang hinter dem Objektiv 18 angeordnet ist, daß das Licht von dort aus gleichzeitig auf zwei CCD-Zeilen fällt. Bei Verwendung von im Handel erhältlichen Farb-CCD-Zeilensensoren 4, bei denen jeweils immer drei durch einen Rot-, Blau- bzw. Gelbfilter abgedeckte Elemente zu einem Pixel zusammengefaßt sind, kann mit einem einzigen Abtastvorgang auch dadurch eine unterschiedliche Ladungsintegration in jeweils einem Teil der Elemente hervorgerufen werden, daß die spektrale Verteilung des auf den CCD-Zeilensensor 4 einfallenden Lichtes so gewählt wird, daß beispielsweise in einem von einem Blaufilter abgedeckten Element eines Pixels eine höhere oder niedrigere Ladungsintegration bewirkt wird, als in einem von einem Rot- und/oder Grünfilter abgedeckten Element. Fig. 6 zeigt eine derartige Spektralverteilung von einfallendem weißem Licht W der Lichtquelle 10 neben den spektralen Durchlässigkeiten der drei Filter (R = Rot, B = Blau, G = Grün). Dabei entspricht jeweils die Schnittmenge der Kurve W der Spektralverteilung des einfallenden Lichtes mit den drei Kurven R, B, G der spektralen Durchlässigkeit der Filter derjenigen Ladungsintegration, die vom einfallenden Licht in den drei jeweils mit den Filtern abgedeckten Elementen eines Pixels bewirkt wird. Da die schraffiert gezeichnete Schnittmenge mit der Durchlässigkeitskurve G des Grünfilters um ein Vielfaches größer ist als die gepunktet gezeichnete Schnittmenge mit der Durchlässigkeitskurve B des Blaufilters, können an Stelle der Ausgangssignale jeweils benachbarter ungeradzahliger bzw. geradzahliger Elemente bei dem zuvor beschriebenen Beispiel beispielsweise die Ausgangssignale von jeweils zwei benachbarten mit einem Grün- bzw. mit einem Blaufilter abgedeckter Elemente des CCD-Zeilensensors gemeinsam ausgewertet werden. Das heißt, daß die Signale von den mit einem Blaufilter abgedeckten Elementen im Zeilenspeicher 28 und die Signale von den mit einem Grünfilter abgedeckten Elementen im Zeilenspeicher 30 zwischengespeichert werden, wobei ein den Schwellenwert erreichender Teil der Signale des Zwischenspeichers 30 verworfen und der restliche Teil nach einer Pegelkorrektur zusammen mit entsprechenden Signalen im Zeilenspeicher 28, deren Adressen den Adressen der verworfenen Signale entsprechen, der Bildwiedergabe zugrundegelegt wird.

Da bei den kommerziell erhältlichen CCD-Zeilensensoren jeweils drei Elemente zu einem Pixel zusammengefaßt sind, kann das Verfahren auch auf drei Pegelstufen ausgedehnt werden.

Grundsätzlich können die erfindungsgemäßen Verfahren allgemein bei der Bildaufzeichnung mit Hilfe von CCD-Sensoren angewandt werden, bevorzugt überall dort, wo Bilder mit hoher optischer Dichte, d.h. stark schwankender Helligkeit aufgezeichnet werden, wie beispielsweise im Druckvorstufenbereich. An Stelle des durch die Bildvorlage hindurchtretenden Lichtes kann bei lichtundurchlässigen Bildvorlagen selbstverständlich Auflicht verwendet werden, das von der Bildvorlage durch die Schlitzblende zum CCD-Zeilensensor 4 reflektiert wird.

Durch die Anwendung des erfindungsgemäßen Verfahrens kann der Störabstand zwischen einem zur Intensität des einfallenden Lichtes proportionalen Ausgangssignal und einem das Ausgangssignal überlagernden signalunabhängigen Rauschen vergrößert werden.

## Patentansprüche

1. Verfahren zur Erhöhung der Graustufenauflösung bei der Wiedergabe einer mit einem CCD-Sensor abgetasteten Bildvorlage oder dergleichen, bei welchem jeweils von einzelnen Elementen der Bildvorlage in entsprechende einzelne Elemente des CCD-Sensors einfallendes Licht in elektrische Ausgangssignale umgewandelt wird, die der Bildwiedergabe zugrundegelegt werden, dadurch gekennzeichnet, daß der Wiedergabe hellerer Partien der Bildvorlage Ausgangssignale zugrundegelegt werden, die durch Abtasten der Bildvorlage mit Licht, das in mindestens einem Teil der entsprechenden Sensorelemente eine im Verhältnis geringere Ladungsintegration bewirkt, erzeugt werden, während der Wiedergabe dunklerer Partien der Bildvorlage Ausgangssignale zugrundegelegt werden, die durch Abtasten der Bildvorlage mit Licht, das in mindestens einem Teil der Sensorelemente eine im Verhältnis höhere Ladungsintegration bewirkt, erzeugt werden.

2. Verfahren nach Anspruch 1, dadurch gekennzeichnet, daß die der Wiedergabe der dunkleren Partien der Bildvorlage zugrundegelegten Ausgangssignale einer Pegelkorrektur unterworfen werden.

3. Verfahren nach Anspruch 1 oder 2, dadurch gekennzeichnet, daß die Bildvorlage mindestens zweimal abgetastet wird, wobei das von den Elementen der Bildvorlage einfallende Licht in den entsprechenden Elementen des CCD-Sensors bei jedem der Abtastvorgänge eine unterschiedliche Ladungsintegration bewirkt

4. Verfahren nach einem der Ansprüche 1 bis 3, dadurch gekennzeichnet, daß die Bildvorlage mindestens zweimal mit unterschiedlicher Lichtintensität abgetastet wird, wobei der Wiedergabe hellerer Partien der Bildvorlage Ausgangssignale zugrundegelegt werden, die beim Abtasten mit einer im Verhältnis geringeren Lichtintensität in entsprechenden Elementen des CCD-Sensors erzeugt werden, während der Wiedergabe dunklerer Partien der Bildvorlage Ausgangssignale zugrundegelegt werden, die beim Abtasten mit einer im Verhältnis höheren Lichtintensität in entsprechenden Elementen des CCD-Sensors erzeugt werden.

5. Verfahren nach Anspruch 3 oder 4, dadurch gekennzeichnet, daß die Bildvorlage mindestens bei einem der Abtastvorgänge mit Licht abgetastet wird, dessen Intensität so gewählt ist, daß die Intensität des von den hellsten Partien der Bildvorlage in entsprechende Elemente des CCD-Sensors einfallenden Lichts unterhalb eines Sättigungspegels der Sensorelemente bleibt.

6. Verfahren nach einem der Ansprüche 3 bis 5, dadurch gekennzeichnet, daß die Bildvorlage mindestens bei einem der Abtastvorgänge mit Licht abgetastet wird, dessen Intensität so gewählt ist, daß die Intensität des von helleren Partien der Bildvorlage in entsprechende Elemente des CCD-Sensors einfallenden Lichts so groß ist, daß in diesen Elementen eine Übersteuerung der Sensorelemente erfolgt.

7. Verfahren nach einem der Ansprüche 1 bis 6, dadurch gekennzeichnet, daß die Bildvorlage zweimal aufeinanderfolgend abgetastet wird.

8. Verfahren nach einem der Ansprüche 4 bis 7, dadurch gekennzeichnet, daß die Bildvorlage zunächst mit einer verhältnismäßig geringen Lichtintensität und dann mit einer verhältnismäßig hohen Lichtintensität abgetastet wird.

9. Verfahren nach einem der Ansprüche 3 bis 8, dadurch gekennzeichnet, daß die Bildvorlage bei einem zweiten Abtastvorgang mit einer gegenüber einem ersten Abtastvorgang um das L-fache größeren Lichtintensität abgetastet wird, wobei L größer als 10, vorzugsweise größer als 20 ist.

10. Verfahren nach Anspruch 9, dadurch gekennzeichnet, daß mindestens ein Teil der bei dem zweiten Abtastvorgang erzeugten Ausgangssignale jeweils rechnerisch einer Pegelkorrektur um den Faktor L unterzogen wird.

11. Verfahren nach einem der Ansprüche 3 bis 10, dadurch gekennzeichnet, daß die bei den Abtastvorgängen erzeugten Ausgangssignale gespeichert werden.

12. Verfahren nach einem der Ansprüche 3 bis 11, dadurch gekennzeichnet, daß die Abtastvorgänge der Bildvorlage zonenweise nacheinander durchgeführt werden.

13. Verfahren nach einem der Ansprüche 3 bis 12, dadurch gekennzeichnet, daß die Abtastvorgänge der Bildvorlage zeilenweise nacheinander durchgeführt werden.

14. Verfahren nach einem der Ansrüche 3 bis 13, dadurch gekennzeichnet, daß die Bildvorlage in ihrer Gesamtheit mindestens zweimal aufeinanderfolgend abgetastet wird.

15. Verfahren nach Anspruch 14, dadurch gekennzeichnet, daß zwei aufeinanderfolgende Abtastvorgänge der Bildvorlage bei jeweils entgegengesetzter Richtung einer Relativbewegung zwischen der Bildvorlage und dem CCD-Sensor durchgeführt werden.

16. Verfahren nach einem der Ansprüche 4 bis 15, dadurch gekennzeichnet, daß die einzelnen Zonen oder Zeilen der Bildvorlage oder die Bildvorlage in ihrer Gesamtheit wechselweise mit im Verhältnis geringerer und mit im Verhältnis höherer Lichtintensität beleuchtet werden.

17. Verfahren nach Anspruch 16, dadurch gekennzeichnet, daß die wechselweise Beleuchtung der Zonen oder Zeilen der Bildvorlage in Synchronisation mit einer Relativverschiebung zwischen der Bildvorlage und dem CCD-Sensor erfolgt.

18. Verfahren nach einem der Ansprüche 4 bis 17, dadurch gekennzeichnet, daß die Intensität des von einer Lichtquelle auf die Bildvorlage einfallenden Lichts durch Veränderung der Intensität des von der Lichtquelle abgestrahlten Lichts gesteuert wird.

19. Verfahren nach einem der Ansprüche 4 bis 17, dadurch gekennzeichnet, daß die Intensität des von einer Lichtquelle auf die Bildvorlage einfallenden Lichts durch unterschiedlich starkes Abblenden der Lichtquelle gesteuert wird.

20. Verfahren nach einem der Ansprüche 3 bis 17, dadurch gekennzeichnet, daß bei konstanter Intensität des von einer Lichtquelle auf die Bildvorlage einfallenden Lichts die Ladungsintegration im CCD-Sensor bei den einzelnen Abtastvorgängen nach Ablauf unterschiedlicher Zeiträume abgeschaltet wird.

21. Verfahren nach Anspruch 20, dadurch gekennzeichnet, daß die Abschaltung der Ladungsintegration wechselweise und in Synchronisation mit einer vorzugsweise quer zur Zeilenausrichtung erfolgenden Relativverschiebung zwischen der Bildvorlage und dem CCD-Sensor erfolgt.

22. Verfahren nach einem der Ansprüche 3 bis 21, dadurch gekennzeichnet, daß die Bildvorlage bei einem ersten Abtastvorgang mit geringerer Lichtintensität abgetastet und die Lage hellerer Partien der Bildvorlage gespeichert wird.

23. Verfahren nach Anspruch 22, dadurch gekennzeichnet, daß beim Abtasten der helleren Partien bei einem zweiten Abtastvorgang in den entsprechenden Sensorelementen eine geringere Ladungsintegration bewirkt wird.

24. Verfahren nach Anspruch 23, dadurch gekennzeichnet, daß die Intensität des einfallenden Lichts während des Abtastens der helleren Partien abgesenkt wird.

25. Verfahren nach Anspruch 24, dadurch gekennzeichnet, daß die Intensität soweit abgesenkt wird, daß keine Übersteuerung in den Elementen des CCD-Sensors eintritt.

26. Verfahren nach einem der Ansprüche 22 bis 25, dadurch gekennzeichnet, daß die Bildvorlage durch ein Leuchtdiodenarray mit Einzelansteuerung beleuchtet wird, wobei den helleren Partien entsprechende Bereiche des Arrays abgeschaltet werden.

27. Verfahren nach einem der Ansprüche 22 bis 25, dadurch gekennzeichnet, daß das von einer Lichtquelle mit gleichmäßiger Intensität auf die Bildvorlage einfallende Licht durch ein vorzugsweise zeilenförmiges, zwischen der Lichtquelle und der Bildvorlage angeordnetes LCD-Modul in den helleren Partien abgeblendet wird.

28. Verfahren nach einem der Ansprüche 23 bis 27, dadurch gekennzeichnet, daß beim ersten und zweiten Abtastvorgang erhaltene Koordinatenwerte interpoliert werden.

29. Verfahren nach einem der Ansprüche 1 bis 28, dadurch gekennzeichnet, daß die Integrationszeit jeweils zweier benachbarter Elemente des CCD-Sensors so gesteuert wird, daß ein erster Teil dieser Elemente bei Vollaussteuerung einen Sättigungspegel erreicht oder geringfügig unterschreitet, während ein zweiter Teil dieser Elemente optisch übersteuert wird, und daß der Bildwiedergabe Ausgangssignale zugrunde gelegt werden, die sich jeweils aus den Ausgangssignalen der zwei benachbarten Elemente zusammensetzen.

30. Verfahren nach Anspruch 29, dadurch gekennzeichnet, daß jeweils die Integrationszeit eines geradzahligen und eines ungeradzahligen Elementes des CCD-Sensors, deren Ladungen über jeweils unterschiedliche Transportregister geführt werden, unterschiedlich ist.

31. Verfahren nach Anspruch 30, dadurch gekennzeichnet, daß jeweils die Ausgangssignale der benachbarten geradzahligen und ungeradzahligen Elemente unter entsprechender Berücksichtigung der unterschiedlichen Integrationszeit zusammengefaßt werden.

32. Verfahren nach Anspruch 1 oder 2, dadurch gekennzeichnet, daß die elektrischen Ausgangssignale von mindestens jeweils zwei, vorzugsweise jeweils drei voneinander unabhängigen, jeweils mit unterschiedlichen Farbfiltern abgedeckten Elementen des CCD-Sensors gemeinsam ausgewertet werden, und daß die spektrale Verteilung des einfallenden Lichts so gewählt wird, daß in jeweils mindestens einem der gemeinsam ausgewerteten Elemente eine im Verhältnis geringere Ladungsintegration bewirkt wird, während in jeweils mindestens einem anderen der gemeinsam ausgewerteten Elemente eine im Verhältnis höhere Ladungsintegration bewirkt wird.

33. Verfahren nach Anspruch 32, dadurch gekennzeichnet, daß jeweils einander benachbarte Elemente gemeinsam ausgewertet werden.

34. Verfahren nach Anspruch 32 oder 33, dadurch gekennzeichnet, daß die spektrale Verteilung des einfallenden Lichts so gewählt wird, daß beim Abtasten der helleren Partien der Bildvorlage mindestens eines der gemeinsam ausgewerteten Elemente übersteuert wird.

35. Verfahren nach Anspruch 34, dadurch gekennzeichnet, daß das übersteuerte Element gegenüber mindestens einem anderen der gemeinsam ausgewerteten Elemente um einen Faktor übersteuert wird, der größer ist als 5 vorzugsweise zwischen 10 und 30 liegt.

36. Verfahren nach einem der Ansprüche 32 bis 35, dadurch gekennzeichnet, daß beim Abtasten der im Verhältnis helleren Partien der Bildvorlage mindestens eines der gemeinsam ausgewerteten Elemente geringfügig unterhalb eines Sättigungspegels der Sensorelemente bleibt.

37. Verfahren nach einem der Ansprüche 32 bis 36, dadurch gekennzeichnet, daß der Wiedergabe der im Verhältnis helleren Partien der Bildvorlage Ausgangssignale jeweils derjenigen Elemente der jeweils gemeinsam ausgewerteten Elemente des CCD-Sensors zugrundegelegt werden, die beim Abtasten dieser Partien unterhalb eines Sättigungspegels der Sensorelemente bleiben.

38. Verfahren nach einem der Ansprüche 32 bis 37, dadurch gekennzeichnet, daß der Wiedergabe der im Verhältnis dunkleren Partien der Bildvorlage Ausgangssignale jeweils derjenigen Elemente der jeweils gemeinsam ausgewerteten Elemente des CCD-Sensors zugrundegelegt werden, die beim Abtasten der helleren Partien übersteuert werden.

39. Verfahren nach einem der Ansprüche 34 bis 38, dadurch gekennzeichnet, daß die Ausgangssignale derjenigen Elemente, die der Wiedergabe der im Verhältnis dunkleren Partien der Bildvorlage zugrunde gelegt werden, zuvor einer Pegelkorrektur unterworfen werden.

40. Verfahren nach einem der Ansprüche 32 bis 39, dadurch gekennzeichnet, daß die spektrale Verteilung des einfallenden Lichts so gewählt wird, daß jeweils in einem Pixel aus drei Elementen, die durch einen Rotfilter bzw. einen Grün-filter und einen Blaufilter abgedeckt sind, beim Abtasten einer gleichmäßig hellen oder gleichmäßig dunklen Partie der Bildvorlage jeweils drei unterschiedliche hohe Ausgangssignale erzeugt werden.

41. Vorrichtung zur Erhöhung der Graustufenauflösung bei der Wiedergabe einer Bildvorlage oder dergleichen, mit mindestens einer die Bildvorlage beleuchtenden Lichtquelle und mindestens einem CCD-Sensor mit einer Mehrzahl einzelner Elemente, in denen jeweils von einzelnen Elementen der Bildvorlage einfallendes Licht in elektrische Ausgangssignale umgewandelt wird, insbesondere zur Durchführung des Verfahrens nach einem der Ansprüche 1 bis 40, gekennzeichnet durch eine Steuerung, die der Wiedergabe hellerer Partien der Bildvorlage Ausgangssignale zugrundelegt, die beim Abtasten der Bildvorlage mit Licht, das in mindestens einem Teil der Sensorelemente eine im Verhältnis geringere Ladungsintgration bewirkt, erzeugt werden, und die der Wiedergabe dunklerer Partien der Bildvorlage Ausgangsignale zugrundelegt, die beim Abtasten der Bildvorlage mit Licht, das in mindestens einem Teil der Sensorelemente eine im Verhältnis höhere Ladungsintegration bewirkt, erzeugt werden.

42. Vorrichtung nach Anspruch 41, dadurch gekennzeichnet, daß die Steuerung die Bildvorlage mindestens zweimal mit Licht unterschiedlicher Intensität abtastet und der Wiedergabe hellerer Partien der Bildvorlage Ausgangssignale zugrundelegt, die beim Abtasten mit einer im Verhältnis geringeren Lichtintensität in den entsprechenden Elementen des CCD-Sensors erzeugt werden, während sie der Wiedergabe dunklerer Partien der Bildvorlage Ausgangssignale zugrundelegt, die beim Abtasten mit einer im Verhältnis höheren Lichtintensität in entsprechenden Elementen des CCD-Sensors erzeugt werden.

43. Vorrichtung nach Anspruch 42, dadurch gekennzeichnet, daß die Intensität der Lichtquelle veränderbar ist.

44. Vorrichtung nach Anspruch 43, dadurch gekennzeichnet, daß die Intensität der Lichtquelle um einen Faktor L veränderbar ist, der größer als 10, vorzugsweise größer als 20 ist.

45. Vorrichtung nach einem der Ansprüche 41 bis 44, dadurch gekennzeichnet, daß das Verhältnis zwischen einem Sättigungspegel der Elemente des CCD-Sensors und einer ersten eingestellten Lichtintensität derart ist, daß der Sättigungspegel beim Abtasten hellerer Partien der Bildvorlage mit der ersten Lichtintensität nicht erreicht, vorzugsweise geringfügig unterschritten wird.

46. Vorrichtung nach einem der Ansprüche 41 bis 45, dadurch gekennzeichnet, daß das Verhältnis zwischen einem Sättigungspegel der Elemente des CCD-Sensors und einer zweiten eingestellten Lichtintensität derart ist, daß der Sättigungspegel beim Abtasten hellerer Bildpartien der Bildvorlage mit der zweiten Lichtintensität weit überschritten wird.

47. Vorrichtung nach Anspruch 41 oder 42, dadurch gekennzeichnet, daß die Intensität der Lichtquelle konstant ist.

48. Vorrichtung nach Anspruch 47, gekennzeichnet durch mindestens eine in den Lichtweg zwischen der Lichtquelle und der Bildvorlage verschiebbare Blende.

49. Vorrichtung nach einem der Ansprüche 40 bis 48, dadurch gekennzeichnet, daß die Steuerung die Ladungsintegration im CCD-Sensor nach unterschiedlichen Zeiträumen abschaltet.

50. Vorrichtung nach einem der Ansprüche 40 bis 49, dadurch gekennzeichnet, daß die Lichtquelle durch ein Array aus einzeln ansteuerbaren Leuchtdioden gebildet ist.

51. Vorrichtung nach einem der Ansprüche 40 bis 49, gekennzeichnet durch ein zwischen der Lichtquelle und der Bildvorlage angeordnetes, vorzugsweise zeilenförmiges LCD-Modul.

52. Vorrichtung nach Anspruch 40, dadurch gekennzeichnet, daß jeweils mehrere Elemente des CCD-Sensors mit unterschiedlichen Farbfiltern abgedeckt sind, daß die Steuerung die Ausgangssignale von diesen Elementen gemeinsam auswertet, und daß die spektrale Verteilung des einfallenden Lichts derart gewählt ist, daß in jeweils mindestens einem der gemeinsam ausgewerteten Elemente eine im Verhältnis geringere Ladungsintegration bewirkt wird, während in jeweils mindestens einem anderen der gemeinsam ausgewerteten Elemente eine im Verhältnis höhere Ladungsintegration bewirkt wird.

53. Vorrichtung nach Anspruch 52, dadurch gekennzeichnet, daß die spektrale Verteilung des einfallenden Lichts so gewählt ist, daß beim Abtasten von helleren Partien der Bildvorlage mindestens eines der gemeinsam ausgewerteten Elemente übersteuert wird.

54. Vorrichtung nach Anspruch 52 oder 53, dadurch gekennzeichnet, daß die spektrale Verteilung des einfallenden Lichts so gewählt ist, daß beim Abtasten von helleren Partien der Bildvorlage mindestens eines der gemeinsam ausgewerteten Elemente geringfügig unterhalb seines Sättigungspegels bleibt.

55. Vorrichtung nach einem der Ansprüche 52 bis 54, dadurch gekennzeichnet, daß die Steuerung der Wiedergabe der helleren Partien der Bildvorlage Ausgangssignale jeweils der Elemente der jeweils gemeinsam ausgewerteten Elemente des CCD-Sensors zugrundelegt, die beim Abtasten dieser Partien unterhalb ihres Sättigungspegels bleiben.

56. Vorrichtung nach einem der Ansprüche 52 bis 55, dadurch gekennzeichnet, daß die Steuerung der Wiedergabe der im Verhältnis dunkleren Partien der Bildvorlage Ausgangssignale jeweils der Elemente der jeweils gemeinsam ausgewerteten Elemente des CCD-Sensors zugrundelegt, die beim Abtasten der helleren Partien der Bildvorlage übersteuert werden.

57. Vorrichtung nach einem der Ansprüche 52 bis 56, dadurch gekennzeichnet, daß die Steuerung mindestens diejenigen Ausgangssignale, die der Wiedergabe der im Verhältnis dunkleren Partien der Bildvorlage zugrunde gelegt werden, einer Pegelkorrektur unterwirft.

58. Vorrichtung nach einem der Ansprüche 40 bis 57, dadurch gekennzeichnet, daß der CCD-Sensor als Zeilensensor ausgebildet ist.

59. Vorrichtung nach einem der Ansprüche 40 bis 57, dadurch gekennzeichnet, daß der CCD-Sensor als CCD-Matrix ausgebildet ist.

60. Vorrichtung nach einem der Ansprüche 40 bis 57, dadurch gekennzeichnet, daß der CCD-Sensor als CCD-Bildsensor ausgebildet ist.
